Europäisches Patentamt

European Patent Office

Office européen des brevets

(19)

(11) Numéro de publication : **0 437 989 B1**

(12)

# FASCICULE DE BREVET EUROPEEN

(45) Date de publication du fascicule du brevet :
**09.03.94 Bulletin 94/10**

(51) Int. Cl.⁵ : **C01B 33/34, B01J 29/28**

(21) Numéro de dépôt : **90403417.0**

(22) Date de dépôt : **30.11.90**

(54) **Zéolithe de type lévyne et son procédé de préparation.**

(30) Priorité : **21.12.89 FR 8917163**

(43) Date de publication de la demande :
**24.07.91 Bulletin 91/30**

(45) Mention de la délivrance du brevet :
**09.03.94 Bulletin 94/10**

(84) Etats contractants désignés :
**CH DE GB IT LI NL**

(56) Documents cités :
**EP-A- 0 040 016
EP-A- 0 091 048
NEW DEVELOPMENTS IN ZEOLITE SCIENCE
AND TECHNOLOGY, PROCEEDINGS OF THE
7TH INTERNATIONAL ZEOLITE CONFE-
RENCE, Tokyo, 17-22 août 1986, pages
121-128, Kodansha, Tokyo, JP; J.L. GUTH et
al.: "New route to pentasil-type zeolites using
a non alkaline medium in the presence of
fluoride ions"**

(73) Titulaire : **INSTITUT FRANCAIS DU PETROLE
4, Avenue de Bois Préau
F-92502 Rueil-Malmaison (FR)**

(72) Inventeur : **Caullet, Philippe
4, rue Kellermann
F-68110 Illzach (FR)**
Inventeur : **Guth, Jean-Louis
59, rue Bellevue Brunstatt
F-68200 Mulhouse (FR)**
Inventeur : **Faust, Anne-Catherine
23 rue de Bourgogne
F-68100 Mulhouse (FR)**
Inventeur : **Joly, Jean-François
20, rue Béranger
F-75003 Paris (FR)**
Inventeur : **Raatz, Francis
10, Allée Jacques Prévert
F-78260 Achères (FR)**

Jouve, 18, rue Saint-Denis, 75001 PARIS

## Description

L'invention concerne une nouvelle zéolithe de type lévyne et un procédé de préparation de cette zéolithe. En raison de leurs propriétés de sélectivité géométrique et d'échange ionique, les zéolithes sont utilisées industriellement sur une large échelle, aussi bien en adsorption (par exemple séchage de gaz, séparation de paraffines linéaires et branchées etc.) qu'en catalyse (par exemple craquage catalytique, hydrocraquage, isomérisation, oligomérisation etc).

La composition chimique des zéolithes contenant dans leur charpente les éléments Si et Al peut être représentée par la formule approchée suivante:

$$M_{2/n}O, Al_2O_3, xSiO_2$$

où

M représente un cation de valence n, tel que par exemple un alcalin, un alcalino-terreux ou un cation organique,

x varie, en fonction des structures, entre 2 et l'infini, auquel cas la zéolithe est une silice microporeuse.

Les zéolithes isostructurales à la lévyne, qui existent dans la nature, sont toujours synthétisées en présence de cations alcalins et d'un nombre très limité de structurants organiques. Par exemple, la zéolithe ZSM-45, riche en silice, est synthétisée en présence de diméthyldiéthylammonium (US-A-4495303, EP-A-0107370). La zéolithe ZK-20 est synthétisée en présence de méthyl-1, azonia-1, azabicyclo-4(2,2,2) octane (US-A-3459676). La zéolithe Nu-3 est également isostructurale à la zéolithe lévyne (US-A-4361715, US-A-4372930, EP-A-0255770).

Toutes les zéolithes de type lévyne préparées jusqu'à présent ont été synthétisées en milieu basique classique, c'est-à-dire dans un milieu alcalin à un pH généralement supérieur à 9, milieu dans lequel l'agent mobilisateur de la silice est l'anion $OH^-$. Un autre milieu de synthèse des zéolithes a été récemment découvert : il s'agit du milieu fluorure, dans lequel l'agent mobilisateur de la silice est l'anion $F^-$; dans ce milieu, le pH est généralement inférieur à 10 (voir par exemple J.L. GUTH, H. KESSLER et R. WEY, Proc. 7th Int. Zeolite Conf., Tokyo, août 17-22, 1986, p. 121). La synthèse d'un nombre limité de structures zéolithiques a déjà été réussie dans ce nouveau milieu, comme par exemple la MFI (demande de brevet français n° 88/09631) et la ferriérite (demande de brevet français n° 86/16362).

Par rapport au milieu de synthèse alcalin ($OH^-$), le milieu fluorure présente un certain nombre d'avantages très appréciables. En effet, en milieu alcalin, la plupart des zéolithes synthétisées sont métastables : on risque donc au cours de la synthèse de voir apparaître des phases solides plus stables et de précipiter des phases non désirées. Cette difficulté ne fait que s'accroître lorsque les quantités à préparer augmentent, c'est-à-dire lorsque l'on passe du stade laboratoire au stade industriel. Par ailleurs, ces zéolithes métastables dans le milieu réactionnel basique ne sont obtenues que grace à une forte sursaturation en espèces actives dans le milieu. Ceci provoque une nucléation rapide et, par conséquent, conduit à des cristaux de petites tailles, les dimensions moyennes de ces cristaux se situant dans le domaine du micromètre. L'élaboration de cristaux de plus grande taille est difficile en milieu basique. Or, dans certaines applications, il peut être intéressant de disposer de cristaux de grande taille de manière à préserver par exemple la stabilité thermique du solide.

De nombreuses applications, en particulier en catalyse acide, nécessitent des zéolithes sous une forme protonée et complétement débarrassées de leurs cations de compensation alcalins ou alcalino-terreux introduits lors de la synthèse. On peut aboutir à la forme protonée en procédant à des échanges ioniques longs et répétés avec des cations $NH_4$ par exemple, échanges suivis de calcination pour décomposer ces cations en protons. Cette étape d'échange d'ions pourrait être évitée si on pouvait remplacer entièrement les cations alcalins ou alcalino-terreux par des cations décomposables lors de la synthèse, c'est-à-dire des cations $NH_4$ et/ou organiques. Introduire des cations $NH_4$ dans le solide lors de la synthèse en milieu basique est impossible car le pH est trop élevé et alors $NH_4$ serait transformé en $NH_3$. De plus les synthèses effectuées à des pH où le cation $NH_4$ est stable sont difficiles et longues à cause de la faible solubilité des sources de silice à ces bas pH.

Un avantage supplémentaire des synthèses réalisées en milieu fluorure par rapport à celles réalisées en milieu classique $OH^-$ est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de remarquer que la structure cristallographique d'un solide ne suffit pas pour définir entièrement ses propriétés, et plus particulièrement ses propriétés acides qui jouent un rôle primordial en catalyse.

Contrairement à leurs homologues préparés selon l'art antérieur, les zéolithes de type lévyne préparées selon l'invention contiennent du fluor après l'étape de synthèse et également l'étape d'élimination des composés organiques introduits lors de la synthèse. Le fluor, comme nous le verrons plus loin, confère aux zéolithes lévyne suivant l'invention des propriétés acides et d'échange ionique particulières.

2

Un autre avantage important du milieu de synthèse fluorure est de permettre l'obtention de zéolithe lévyne exempte de cations sodium.

L'invention a donc pour objet une nouvelle zéolithe cristalline synthétique de type lévyne, ainsi qu'un procédé de synthèse de ladite zéolithe dans lequel les inconvénients cités précédemment sont évités, et qui confère de plus aux zéolithes selon l'invention des propriétés, particulièrement des propriétés acides, améliorées. Le nouveau type de zéolithe suivant l'invention peut être utilisé en adsorption et en catalyse. La zéolithe de type lévyne suivant l'invention a (après synthèse) la formule générale approchée suivante:

$$M_{2/n}O, Al_2O_3, xSiO_2$$

où M représente un proton et/ou un cation métallique (n étant la valence de M).

On verra ci-dessous que dans une méthode de préparation selon l'invention, ledit proton ou cation métallique résulte de la décomposition thermique d'au moins un cation comme par exemple $NH_4$ ou/et d'au moins un agent organique comme la méthylamine ($CH_3NH_2$) ou la quinuclidine (1,4-éthylène pipéridine) présents dans le milieu réactionnel et/ou d'au moins un cation de métal non décomposable issu ou non du milieu réactionnel comme par exemple un cation alcalin et/ou alcalino-terreux ou un autre cation métallique précisé ci-après.

La zéolithe selon l'invention est notamment caractérisée par:

i) un nombre x compris entre 5 et 200, de préférence entre 6 et 40 (x étant le rapport molaire $SiO_2/Al_2O_3$),

ii) un diagramme de diffraction des rayons X représenté dans le tableau I de la description,

iii) une teneur en fluor comprise entre environ 0,005 et 2,0% en poids, de préférence entre environ 0,01 et 1,5% en poids.

Elle est également caractérisée par le fait qu'elle a été synthétisée en milieu fluorure.

Cette zéolithe de type lévyne selon l'invention présente généralement au moins une dimension des cristaux comprise entre 0,10 et 10 μm et, de préférence, entre 0,5 et 5 μm (1 μm = $10^{-6}$ mètre).

L'invention concerne aussi un procédé de préparation de ladite zéolithe de type lévyne, qui consiste en ce que:

a) on forme un mélange réactionnel en solution ayant un pH inférieur à environ 9 et comprenant de l'eau, au moins une source de silice, au moins une source d'aluminium, au moins une source d'agent mobilisateur contenant des ions fluorures ($F^-$), au moins une source d'au moins un agent structurant choisi dans le groupe formé par la quinuclidine et un mélange de quinuclidine et de méthylamine, cet agent structurant pouvant éventuellement fournir des cations organiques, éventuellement une source de cations alcalins et/ou alcalino-terreux, ledit mélange réactionnel ayant une composition, en termes de rapport molaire, comprise dans les intervalles de valeurs suivants :

Si/Al : 2-100 , de préférence 2-60,

$F^-$/Si : 0,1-8 , de préférence 0,2-6,

$H_2O$/Si : 4-30 , de préférence 5-20,

(R+R')/Si : 0,4-4

R/R' : 0,1-infini, de préférence 0,2-infini,

où R est la quinuclidine et R' la méthylamine

(R' = 0 dans le cas où on n'utilise pas de méthylamine),

b) on maintient ledit mélange réactionnel à une température de chauffage comprise entre environ 50 et environ 250 °C, de préférence entre environ 80 et environ 220 °C, jusqu'à ce que l'on obtienne un composé cristallin, et

c) on calcine ledit composé à une température supérieure à environ 350 °C et, de préférence, supérieure à environ 450 °C, par exemple sous un mélange d'air et d'azote.

La présence, après l'étape de calcination (étape c)) destinée à éliminer les composés organiques, de fluor dans les zéolithes de type lévyne selon l'invention, à des teneurs comprises de préférence entre 0,01 et 1,5% en poids, entraine des modifications des propriétés acides et d'échange ionique des solides. Ceux-ci se distinguent des zéolithes lévyne obtenues en milieu classique. En effet, en fonction des conditions de synthèse, les solides selon l'invention sont caractérisés par un spectre de vibration infra-rouge dans la région des OH (3800 à 3500 $cm^{-1}$) qui présente des bandes attribuées aux groupes Si-OH (zone 3730-3750 $cm^{-1}$) et aux groupes Al-OH (zone 3580-3640 $cm^{-1}$) moins intenses que celles des zéolithes lévyne de l'art antérieur de même rapport Si/Al. Corrélativement, la capacité d'échange ionique des zéolithes selon l'invention à l'état fluoré est généralement inférieure à celle des produits de l'art antérieur pour le même rapport Si/Al.

Les zéolithes lévyne suivant l'invention, dont la teneur en hydroxyles et la capacité d'échange sont réduites, possèdent de manière surprenante des propriétés acides remarquables comme en témoignent la thermodésorption d'ammoniac et la spectroscopie infra-rouge de bases faibles adsorbées telles que, par exemple, l'éthylène ou $H_2S$. Il est donc clair que l'acidité des solides selon l'invention est de nature particulière. Sans nous lier à une théorie particulière, on peut proposer que dans les solides selon l'invention une partie plus ou moins importante des sites acides de charpente du type Al-OH-Si sont remplacés par des sites du type Al-F-Si.

La nature exacte des sites acides contenus dans les zéolithes lévyne suivant l'invention reste à préciser ; cependant, il semble que l'existence de ces sites particuliers est lié à la présence de fluor dans les solides ou au moins résulte du fait que la synthèse est réalisée en milieu fluorure.

Par des traitements particuliers, il serait possible d'éliminer tout ou partie du fluor contenu dans les solides suivant l'invention sans altérer leur cristallinité. Une technique que l'on peut utiliser pour défluorer lesdit solides consiste à procéder à un traitement dans une solution de $NH_4OH$ à des températures comprises par exemple entre la température ambiante (15 à 25 °C) et 150 °C (traitement sous pression).

On peut avantageusement chauffer le mélange réactionnel dans un autoclave revêtu intérieurement de polytétrafluoroéthylène (PTFE) entre environ 50 et environ 250 °C et de préférence entre environ 80 et environ 220 °C, pendant une durée qui peut varier de quelques heures à quelques jours (habituellement 8 à 1200 heures) selon la température de réaction retenue, jusqu'à l'obtention d'un solide cristallisé que l'on sépare des eaux-mères par filtration et qui est ensuite lavé à l'eau distillé.

De manière avantageuse, on peut préparer ledit mélange réactionnel à un pH compris entre environ 4 et environ 9 et, de manière préférée, entre environ 6 et environ 9.

Selon un mode préféré de la préparation des zéolithes lévyne suivant l'invention, les rapports molaires des constituants du mélange réactionnel sont compris dans les intervalles de valeurs suivants:

Si/Al : 2-30
$F^-$/Si : 0,5-4
$H_2O$/Si : 7-19
(R+R')/Si : 0,4-2,1
R/R' : 0,3-infini

où R est la quinuclidine et R' la méthylamine.

On peut éventuellement ajouter audit mélange réactionnel au moins un sel complémentaire dans un rapport molaire sel complémentaire/$SiO_2$ compris généralement entre 0,1 et 0,5 et, de préférence, entre 0,2 et 0,4 et/ou au moins un germe de la zéolithe formée selon l'invention dans un rapport pondéral cristal de zéolithe/$SiO_2$ compris généralement entre 0,01 et 0,1 et, de manière préférée, entre 0,02 et 0,03, de telle sorte que la morphologie, la taille des cristaux ainsi que la cinétique de cristallisation peuvent être avantageusement contrôlées.

On peut travailler avantageusement en milieu agité, ce qui peut permettre de diminuer considérablement le temps de réaction.

Le pH du milieu réactionnel, inférieur à environ 9, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer notamment les silices sous forme d'hydrogels, d'aérogels, de suspensions colloidales, ainsi que les silices résultant de la précipitation de solutions de silicates solubles ou de l'hydrolyse d'esters siliciques comme l'ester tétraéthylique de l'acide ortho-silicique $Si(OC_2H_4)_4$ ou de complexes comme le fluorosilicate de sodium $Na_2SiF_6$ ou d'ammonium $(NH_4)_2SiF_6$.

Parmi les sources d'aluminium utilisées, on choisira de préférence le chlorure d'aluminium hydraté ($AlCl_3$, $6H_2O$), le nitrate d'aluminium nonahydraté ($Al(NO_3)_3$, $9H_2O$), le sulfate d'aluminium à 16 molécules d'eau ou le fluorure d'aluminium trihydraté $AlF_3$, $3H_2O$. On peut également citer la pseudo-boehmite.

Par ailleurs, au lieu de partir de sources séparées de silice et d'aluminium, on peut également prendre des sources où les deux éléments sont combinés comme par exemple un gel aluminosilicaté fraîchement précipité.

Les anions fluorures $F^-$ peuvent être introduits sous forme de sels desdits agents structurants ou d'ammonium ou de métaux alcalins comme par exemple NaF, $NH_4F$, $NH_4HF_2$ ou sous forme d'acide comme HF ou encore sous forme de composés hydrolysables pouvant libérer des anions fluorures dans l'eau comme le fluorure de silicium $SiF_4$ ou le fluorosilicate d'ammonium $(NH_4)_2SiF_6$ ou de sodium $Na_2SiF_6$.

Les acides ou sels acides, les bases ou sels basiques ajoutés éventuellement pour amener le pH du milieu réactionnel à la valeur désirée peuvent être choisis parmi les acides courants comme, par exemple, HF, HCl, $HNO_3$, $H_2SO_4$, $CH_3COOH$ ou les sels acides comme, par exemple, $NH_4HF_2$, $KHF_2$, $NaHSO_4$, les bases courantes comme, par exemple, $NaHCO_3$, $CH_3COONa$, $Na_2S$, NaHS ou les mélanges tampons comme, par exemple, ($CH_3COOH$, $CH_3COONa$) ou ($NH_4OH$, $NH_4Cl$).

La calcination (étape c)) se déroule avantageusement à une température comprise entre environ 520 et 800 °C sous atmosphère de gaz sec, comme par exemple de l'air ou un gaz inerte, de manière à décomposer l'agent structurant présent dans les pores de la zéolithe.

Après l'étape d'élimination des composés organiques (étape c)) et éventuellement de défluoration partielle

4

ou totale, on peut introduire dans la zéolithe de structure lévyne selon l'invention, par des techniques d'échanges ioniques bien connues dans l'art antérieur, au moins un élément de la classification périodique, dont les cations peuvent être préparés en milieu aqueux et choisis dans la famille constituée par les groupes IIA, IIIA, IB, IIB, IIIB, IVB et VIIIA de la classification périodique des éléments. On citera à titre d'exemple les cations alcalins ou alcalino-terreux, les cations de terres rares, $Fe^{II}$, $Fe^{III}$, $Co^{II}$, $Co^{III}$, $Ni^{II}$, $Cu^{II}$, $Ag^{I}$, $Pt^{II}$.

L'identification des zéolithes de type lévyne suivant l'invention peut se faire de manière aisée à partir de leur diagramme de diffraction des rayons X. Ce diagramme de diffraction peut être obtenu à l'aide d'un diffractomètre en utilisant la méthode classique des poudres avec le rayonnement $K\alpha$ du cuivre. Un étalon interne permet de déterminer précisément les valeurs des angles $2\theta$ associées aux pics de diffraction. Les distances interréticulaires $d_{hkl}$, caractéristiques de l'échantillon, sont calculées à partir de la relation de Bragg. L'estimation de l'erreur de mesure $\Delta(d_{hkl})$ sur $d_{hkl}$ se calcule en fonction de l'erreur absolue $\Delta(2\theta)$ affectée à la mesure de $2\theta$ par la relation de Bragg. En présence d'un étalon interne, cette erreur est minimisée et prise couramment égale à $\pm$ 0,05°. L'intensité relative I/Io affectée à chaque valeur de $d_{hkl}$ est estimée à partir de la hauteur du pic de diffraction correspondant. Cette dernière peut également être déterminée à partir d'un cliché obtenu à l'aide d'une chambre de Debye-Scherrer.

Le tableau I représente le diagramme de diffraction des rayons X caractéristique des zéolithes de type lévyne selon l'invention. Dans la colonne des $d_{hkl}$ on a représenté les valeurs extrèmes que peuvent prendre les différentes distances interréticulaires $d_{hkl}$. Chacune de ces valeurs doit être affectée de l'erreur de mesure généralement comprise entre $\pm$ 0,07 et $\pm$ 0,002 suivant la valeur de $2\theta$ ($d_{hkl}$ est exprimée en Angströms, $1\text{Å} = 10^{-10}$ m).

La zéolithe de structure lévyne selon l'invention peut être utilisée seule ou en mélange avec une matrice au sein d'un catalyseur.

Ladite zéolithe peut par exemple, après synthèse, être mise en forme en utilisant une matrice qui peut être inerte ou active pour la réaction à promouvoir. Les matrices que l'on emploie sont généralement choisies dans le groupe formé par les argiles, les alumines, la silice, la magnésie, la zircone, l'oxyde de titane, l'oxyde de bore et toute combinaison d'au moins deux des composés précités comme la silice-alumine, la silice-magnésie etc.. Toutes les méthodes connues d'agglomérisation et de mise en forme sont applicables, telles que par exemple, l'extrusion, le pastillage, la coagulation en goutte etc..

Le catalyseur possède alors une teneur pondérale en zéolithe lévyne selon l'invention généralement comprise entre 20 et 99,5%, de préférence entre 40 et 95 % et une teneur pondérale en matrice généralement comprise entre 0,5 et 80 %, de préférence entre 5 et 60 %.

Le catalyseur contenant la zéolithe de structure lévyne selon l'invention peut renfermer en outre une fonction hydrogénante ou déshydrogénante constituée en général par au moins un métal ou/et composé de métal choisi parmi les groupes IA, VIB (Cr, Mo, W) et VIII de la classification périodique des éléments, par exemple le platine, le palladium ou/et le nickel.

## TABLEAU I

| 2 θ (°) | $d_{hkl}$ (Å) | I/Io |
|---|---|---|
| 8,67 | 10,200 | 18 |
| 11,04 | 8,010 | 43 |
| 11,84 | 7,470 | 2 |
| 13,40 | 6,600 | 28 |
| 15,99 | 5,540 | 9 |
| 17,41 | 5,091 | 77 |
| 17,63 | 5,027 | 12 |
| 17,93 | 4,945 | 14 |
| 20,91 | 4,245 | 15 |
| 21,29 | 4,170 | 46 |
| 22,03 | 4,032 | 100 |
| 23,32 | 3,811 | 18 |
| 23,81 | 3,733 | 8 |
| 25,24 | 3,526 | 5 |
| 26 | 3,424 | 1 |
| 27 | 3,299 | 19 |
| 28,70 | 3,108 | 18 |
| 28,96 | 3,081 | 21 |
| 29,26 | 3,050 | 9 |
| 31,6 | 2,829 | 1 |
| 32,20 | 2,769 | 39 |
| 34,88 | 2,570 | 7 |
| 36,02 | 2,491 | 4 |
| 37,98 | 2,367 | 2 |
| 39,64 | 2,272 | 2 |
| 40,99 | 2,200 | 2 |
| 42,38 | 2,131 | 3 |
| 42,82 | 2,110 | 4 |
| 43,43 | 2,082 | 4 |
| 44,84 | 2,020 | 2 |
| 47,16 | 1,926 | 2 |
| 48,92 | 1,860 | 5 |

Les exemples suivants illustrent l'invention sans toutefois en limiter la portée.

## EXEMPLE 1

A 3,6 g d'eau distillée on ajoute successivement sous agitation 2,29 g de quinuclidine (0,02 mole), 1,55 g de solution aqueuse à 40% de méthylamine (0,02 mole de $CH_3NH_2$) et 2 g de solution aqueuse à 40% de HF (0,04 mole de HF). On ajoute ensuite successivement sous agitation 1,41 g de silice Merck à 15% d'eau (0,02 mole de $SiO_2$), 0,32 g de pseudo-boehmite à 24,6 % d'eau (0,0047 mole d'aluminium).

Le mélange réactionnel présente la composition molaire suivante :

$$Si/Al = 4,25 \; ; \; (R + R')/Si = F^-/Si = 2 \; ; \; R/R' = 1 \; ; \; H_2O/Si = 17$$

où R et R' désignent respectivement la quinuclidine et la méthylamine.

Le pH du mélange réactionnel est légèrement inférieur à 9. Le mélange réactionnel est homogénéisé pendant environ 5 minutes sous agitation puis transvasé dans un autoclave revêtu intérieurement de téflon. Le mélange réactionnel est alors porté à 170 °C pendant 4 jours, le solide obtenu est séparé des eaux mères par filtration, lavé à l'eau distillé, séché à environ 85 °C pendant 24 heures et calciné à 550 °C pendant 4 heures.

Au microscope optique on distingue des agrégats polycristallins de forme sphérique et de diamètre proche de 25 μm (la taille de chaque cristal étant d'environ 3 μm). D'après le spectre de diffraction des rayons X, ces agrégats sont constitués de lévyne pure, dont le rapport molaire $SiO_2/Al_2O_3$ est d'environ 19 et dont la teneur pondérale en fluor est de 0,15 %.

## EXEMPLE 2

Les conditions de synthèse sont identiques à celles de l'exemple 1, excepté que, d'une part, l'on ajoute au mélange réactionnel 12 mg de lévyne (soit environ 1 % en poids par rapport à la silice engagée) synthétisée en milieu fluorure (et non calcinée) et soigneusement broyée et que, d'autre part, le mélange réactionnel est ici porté à 170 °C pendant 7 jours.

Le produit recueilli (1,35 g), après filtration, lavage, séchage à 85 °C environ pendant 24 heures et calcination à 550 °C pendant 4 heures, se présente sous forme de petits cristaux d'une taille voisine de 3 μm et son spectre de diffraction des rayons X est caractéristique de la zéolithe lévyne pure dont le rapport molaire $SiO_2/Al_2O_3$ est d'environ 19 et dont la teneur pondérale en fluor est d'environ 0,17 %.

## EXEMPLE 3

A 7,3 g d'eau distillé on ajoute successivement sous agitation 4,58 g de quinuclidine (0,041 mole), 3,11 g de solution aqueuse à 40 % de méthylamine (0,041 mole de $CH_3NH_2$) et 4 g de solution aqueuse à 40 % de HF (0,08 mole de HF). A cette solution on ajoute successivement et sous agitation 2,82 g de silice Merck à 15 % d'eau (0,04 mole de $SiO_2$), 1,27 g de pseudo-boehmite à 24,6 % d'eau (0,0188 mole d'aluminium) et environ 48 mg de cristaux de lévyne préparés en milieu fluorure (et non calcinés) et soigneusement broyés (soit 2 % en poids de la silice engagée). Le reste des conditions opératoire est identique à celles décrites dans l'exemple 1, mis à part le fait que le mélange réactionnel est porté à 170 °C pendant 15 jours.

Le mélange réactionnel présente la composition molaire suivante:

$$Si/Al = 2,12 \; ; \; F^-/Si = 2 \; ; \; (R + R')/Si = 1 \; ; \; R/R' = 1 \; ; \; H_2O/Si = 16$$

où R et R' désignent respectivement la quinuclidine et la méthylamine.

On recueille après filtration, lavage, séchage à 85 °C pendant 24 heures et calcination à 550 °C pendant 4 heures, 3,8 g de zéolithe lévyne pure, le rapport molaire $SiO_2/Al_2O_3$ de ladite zéolithe étant de 6,9 environ, sa teneur pondérale en fluor de 0,15 % environ.

## EXEMPLE 4

Les conditions opératoires sont identiques à celles de l'exemple 3, mis à part le fait que la masse de pseudo-boehmite engagée est plus faible, à savoir 0,318 g.

Le mélange réactionnel a alors la composition molaire suivante :

$$Si/Al = 8,5 \; ; \; F^-/Si = (R + R')/Si = 2 \; ; \; R/R' = 1 \; ; \; H_2O/Si = 16$$

où R et R' désignent respectivement la quinuclidine et la méthylamine.

Les 1,8 g de solide recueilli sont constitués de zéolithe lévyne pure de rapport molaire $SiO_2/Al_2O_3$ d'environ 20,6 et de teneur pondérale en fluor d'environ 0,18 %.

**Revendications**

1. Zéolithe cristalline synthétique de type lévyne caractérisée par :
   a) la formule générale approchée suivante :

   $$M_{2/n}O, Al_2O_3, x\, SiO_2$$

   où

   M représente un proton et/ou un cation métallique,
   n est la valence de M,
   x est nombre compris entre 5 et 200,
   b) un diagramme de diffraction des rayons X représenté dans le tableau

## TABLEAU I

| 2 θ (°) | $d_{hkl}$ (Å) | I/Io |
|---------|---------------|------|
| 8,67    | 10,200        | 18   |
| 11,04   | 8,010         | 43   |
| 11,84   | 7,470         | 2    |
| 13,40   | 6,600         | 28   |
| 15,99   | 5,540         | 9    |
| 17,41   | 5,091         | 77   |
| 17,63   | 5,027         | 12   |
| 17,93   | 4,945         | 14   |
| 20,91   | 4,245         | 15   |
| 21,29   | 4,170         | 46   |
| 22,03   | 4,032         | 100  |
| 23,32   | 3,811         | 18   |
| 23,81   | 3,733         | 8    |
| 25,24   | 3,526         | 5    |
| 26      | 3,424         | 1    |
| 27      | 3,299         | 19   |
| 28,70   | 3,108         | 18   |
| 28,96   | 3,081         | 21   |
| 29,26   | 3,050         | 9    |
| 31,6    | 2,829         | 1    |
| 32,20   | 2,769         | 39   |
| 34,88   | 2,570         | 7    |

   c) une teneur en fluor comprise entre environ 0,005 et 2,0 % en poids,
   ladite zéolithe ayant été en outre synthétisée en milieu fluorure.

2. Zéolithe selon la revendication 1 caractérisée en ce que x est un nombre compris entre 6 et 40.

3. Zéolithe selon l'une des revendication 1 et 2 caractérisée en ce qu'elle possède une teneur en fluor comprise entre environ 0,01 et 1,5 % en poids.

**4.** Catalyseur renfermant une zéolithe selon l'une des revendications 1 à 3 et une matrice.

**5.** Catalyseur renfermant une zéolithe selon l'une des revendications 1 à 3, une matrice et au moins un métal ou/et composé de métal choisi parmi les groupes IA, VIB et VIII de la classification périodique des éléments.

**6.** Procédé de préparation d'une zéolithe selon l'une des revendications 1 à 3 caractérisée en ce que :
a) on forme un mélange réactionnel en solution ayant un pH inférieur à environ 9 et comprenant de l'eau, au moins une source de silice, au moins une source d'aluminium, au moins une source d'agent mobilisateur contenant des ions fluorures, au moins une source d'au moins un agent structurant choisi dans le groupe formé par la quinuclidine et un mélange de quinuclidine et de méthylamine, ledit mélange réactionnel ayant une composition, en termes de rapport molaire, comprise dans les intervalles de valeurs suivants :
Si/Al : 2-100
$F^-$/Si : 0,1-8
$H_2O$/Si : 4-30
(R+R')/Si : 0,4-4
R/R' : 0,1-infini
où R et R' désignent respectivement la quinuclidine et la méthylamine,
b) on maintient ledit mélange réactionnel à une température de chauffage comprise entre environ 50 et environ 250 °C jusqu'à ce que l'on obtienne un composé cristallin, et
c) on calcine ledit composé à une température supérieure à environ 350 °C.

**7.** Procédé selon la revendication 6 dans lequel, dans l'étape a), ledit mélange réactionnel a une composition, en termes de rapport molaire, comprise dans les intervalles de valeurs suivants :
Si/Al : 2-60
$F^-$/Si : 0,2-6
$H_2O$/Si : 5-20
(R+R')/Si : 0,5-4
R/R' : 0,2-infini
où R et R' désignent respectivement la quinuclidine et la méthylamine.

**8.** Procédé selon l'une des revendications 6 et 7 dans lequel, dans l'étape a), ledit mélange réactionnel a une composition, en termes de rapport molaire, comprise dans les intervalles de valeurs suivants :
Si/Al : 2-30
$F^-$/Si : 0,5-4
$H_2O$/Si : 7-19
(R+R')/Si : 0,4-2,1
R/R' : 0,3-infini
où R et R' désignent respectivement la quinuclidine et la méthylamine.

**9.** Procédé selon l'une des revendications 6 à 8 dans lequel, dans l'étape a), ledit mélange réactionnel comprend en outre une source de cations alcalins et/ou alcalino-terreux.

**10.** Procédé selon l'une des revendications 6 à 9 dans lequel, dans l'étape b), on maintient ledit mélange réactionnel à une température de chauffage comprise entre environ 80 et environ 220 °C jusqu'à ce que l'on obtienne un composé cristallin.

**11.** Utilisation en adsorption d'une zéolithe selon l'une des revendications 1 à 3 ou préparée selon l'une des revendications 6 à 10.

**Patentansprüche**

**1.** Synthetischer kristalliner Zeolith vom Levyn-Typ, gekennzeichnet durch
a) die folgende allgemeine Näherungsformel:
$$M_{2/n}O, Al_2O_3, x\ SiO_2$$
worin bedeuten:
M ein Proton und/oder ein Metallkation,

n      die Valenz von M und

x      eine Zahl zwischen 5 und 200,

b) ein Röntgenstrahlenbeugungsdiagramm, wie in der folgenden Tabelle angegeben

<u>Tabelle I</u>

| $2\,\theta\,(°)$ | $d_{hkl}\,(Å)$ | $I/I_0$ |
|---|---|---|
| 8,67 | 10,200 | 18 |
| 11,04 | 8,010 | 43 |
| 11,84 | 7,470 | 2 |
| 13,40 | 6,600 | 28 |
| 15,99 | 5,540 | 9 |
| 17,41 | 5,091 | 77 |
| 17,63 | 5,027 | 12 |
| 17,93 | 4,945 | 14 |
| 20,91 | 4,245 | 15 |
| 21,29 | 4,170 | 46 |
| 22,03 | 4,032 | 100 |
| 23,32 | 3,811 | 18 |
| 23,81 | 3,733 | 8 |
| 25,24 | 3,526 | 5 |
| 26 | 3,424 | 1 |
| 27 | 3,299 | 19 |
| 28,70 | 3,108 | 18 |
| 28,96 | 3,081 | 21 |
| 29,26 | 3,050 | 9 |
| 31,6 | 2,829 | 1 |
| 32,20 | 2,769 | 39 |
| 34,88 | 2,570 | 7 |

c) einen Fluorgehalt zwischen etwa 0,005 und 2,0 Gew.-%, wobei der Zeolith außerdem in einem Fluorid-Medium synthetisiert worden ist.

2.    Zeolith nach Anspruch 1, dadurch gekennzeichnet, daß x eine Zahl zwischen 6 und 40 darstellt.

3.    Zeolith nach einem der Ansprüche 1 und 2, dadurch gekennzeichnet, daß er einen Fluorgehalt zwischen etwa 0,01 und 1,5 Gew.-% aufweist.

4.    Katalysator, der einen Zeolith nach einem der Ansprüche 1 bis 3 und eine Matrix (einen Träger) enthält.

5.    Katalysator, der einen Zeolith nach einem der Ansprüche 1 bis 3, eine Matrix (einen Träger) und mindestens ein Metall und/oder eine Verbindung eines Metalls, ausgewählt aus den Gruppen IA, VIB und VIII des Periodischen System der Elemente, enthält.

6. Verfahren zur Herstellung eines Zeoliths nach einem der Ansprüche 1 bis 3, dadurch gekennzeichnet, daß man

a) eine Reaktionsmischung in Form einer Lösung herstellt, die einen pH-Wert unterhalb etwa 9 aufweist und Wasser, mindestens eine Siliciumdioxid-Quelle, mindestens eine Aluminium-Quelle, mindestens eine Quelle für ein Fluoridionen enthaltendes Mobilisierungsmittel, mindestens eine Quelle für mindestens einen Strukturbildner, ausgewählt aus der Gruppe, die besteht aus Chinuclidin und einem Gemisch von Chinuclidin und Methylamin, enthält, wobei die Reaktionsmischung eine solche Zusammensetzung, ausgedrückt durch die Molverhältnisse, hat, daß sie innerhalb der nachstehend angegebenen Werte-Bereiche liegt:

Si/Al : 2-100
$F^-$/Si : 0,1-8
$H_2O$/Si : 4-30
(R+R')/Si : 0,4-4
R/R' : 0,1-$\infty$

worin R und R' jeweils für das Chinuclidin und das Methylamin stehen,

b) die genannte Reaktionsmischung bei einer Erwärmungstemperatur zwischen etwa 50 und etwa 250°C so lange hält, bis man eine kristalline Verbindung erhält, und

c) die genannte Verbindung bei einer Temperatur oberhalb von etwa 350°C calciniert.

7. Verfahren nach Anspruch 6, bei dem in der Stufe (a) die genannte Reaktionsmischung eine solche Zusammensetzung, ausgedrückt durch die Molverhältnisse, hat, daß sie innerhalb der folgenden Werte-Bereiche liegt:

Si/Al : 2-60
$F^-$/Si : 0,2-6
$H_2O$/Si : 5-20
(R+R')/Si : 0,5-4
R/R' : 0,2-$\infty$

worin R und R' jeweils für das Chinuclidin und das Methylamin stehen.

8. Verfahren nach einem der Ansprüche 6 und 7, bei dem in der Stufe (a) die genannte Reaktionsmischung eine solche Zusammensetzung, ausgedrückt durch die Molverhältnisse, hat, daß sie innerhalb der folgenden Werte-Bereiche liegt:

Si/Al : 2-30
$F^-$/Si : 0,5-4
$H_2O$/Si : 7-19
(R+R')/Si : 0,4-2,1
R/R' : 0,3-$\infty$

worin R und R' jeweils für das Chinuclidin und das Methylamin stehen.

9. Verfahren nach einem der Ansprüche 6 bis 8, bei dem in der Stufe (a) die Reaktionsmischung außerdem eine Quelle für Alkalikationen und/oder Erdalkalikationen enthält.

10. Verfahren nach einem der Ansprüche 6 bis 9, bei dem man in der Stufe (b) die Reaktionsmischung bei einer Erwärmungstemperatur zwischen etwa 80 und etwa 220°C so lange hält, bis man eine kristalline Verbindung erhält.

11. Verwendung eines Zeoliths nach einem der Ansprüche 1 bis 3 oder eines nach einem der Ansprüche 6 bis 10 hergestellten Zeoliths zur Adsorption.

**Revendications**

1. A synthetic crystalline zeolite of the levyne type characterized by :

a) the following approximate general formula :

$$M_{2/n}O, Al_2O_3, xSiO_2$$

where M represents a proton and/or a metallic cation,

n is the valence of M,

x is a number ranging from 5 to 200,
b) an X-ray diffraction diagram shown in table I of the description, and
c) a fluorine content ranging from about 0.005 to 2.0 % by weight,
said zeolite having besides been synthetized in a fluoride medium.

2. A zeolite according to claim 1 characterized in that x is a number ranging from 6 to 40.

3. A zeolite according to any one of claims 1 and 2 characterized in that it has a fluorine content ranging from about 0.01 to 1.5 % by weight.

4. A catalyst comprising a zeolite according to any one of claims 1 to 3 and a matrix.

5. A catalyst comprising a zeolite according to any one of claims 1 to 3, a matrix and at least one metal or/and compound of metal selected from groups IA, VIB and VIII of the periodic table of elements.

6. A process for preparing a zeolite according to any one of claims 1 to 3 comprising :
   a) forming a dissolved reaction mixture with a pH value lower than about 9 and comprising water, at least one silica source, at least one aluminum source, at least one source of a mobilizing agent containing fluoride ions, at least one source of at least one structuring agent selected from the group formed by the quinuclidine and a mixture of quinuclidine and methylamine, said reaction mixture having a composition, in terms of molar ratio, ranging between the following values :
   Si/Al             : 2-100
   $F^-$/Si            : 0.1-8
   $H_2O$/Si          : 4-30
   (R+R')/Si         : 0.4-4
   R/R'              : 0.1-infinity
   where R and R' respectively represent the quinuclidine and the methylamine,
   b) maintaining said reaction mixture at a heating temperature ranging from about 50 to about 250°C until a crystalline compound is obtained, and
   c) calcining said compound at a temperature higher than about 350°C.

7. A process according to claim 6 wherein, in stage a), said reaction mixture has a composition, in terms of molar ratio, ranging between the following values :
   Si/Al            : 2-60
   $F^-$/Si           : 0.2-6
   $H_2O$/Si         : 5-20
   (R+R')/Si        : 0.5-4
   R/R'             : 0.2-infinity
   where R and R' respectively represent the quinuclidine and the methylamine.

8. A process according to any one of claims 6 and 7 wherein, in stage a), said reaction mixture has a composition, in terms of molar ratio, ranging between the following values :
   Si/Al            : 2-30
   $F^-$/Si           : 0.5-4
   $H_2O$/Si         : 7-19
   (R+R')/Si        : 0.4-2.1
   R/R'             : 0.3-infinity
   where R and R' respectively represent the quinuclidine and the methylamine.

9. A process according to any one of claims 6 to 8 wherein, in stage a), said reaction mixture also comprises a source of alkaline and/or alkaline-earth cations.

10. A process according to any one of claims 6 to 9 wherein, in stage b), said reaction mixture is maintained at a heating temperature ranging from about 80 to about 220°C until a crystalline compound is obtained.

11. Use in adsorption of a zeolite according to any one of claims 1 to 3 or prepared according to any one of claims 6 to 10.